# FASCICULE DE BREVET EUROPEEN

(11) **EP 4 173 105 B1**
(45) Date de publication et mention de la délivrance du brevet: **01.05.2024**
(21) Numéro de dépôt: 21736616.0
(22) Date de dépôt: 30.06.2021
(51) Int. Cl.: F03B 15/00, H02J 3/32, H02J 3/38, H02J 15/00

(54) **SYSTÈME DE PRODUCTION D'ÉLECTRICITÉ COMPRENANT UNE TURBINE HYDRAULIQUE, AVEC UNE RÉPONSE DYNAMIQUE AMÉLIORÉE**
STROMERZEUGUNGSSYSTEM MIT EINER HYDRAULISCHEN TURBINE, MIT VERBESSERTEM DYNAMISCHEN VERHALTEN
POWER GENERATION SYSTEM COMPRISING A HYDRAULIC TURBINE, WITH IMPROVED DYNAMIC RESPONSE

(30) Priorité: 30.06.2020 FR 2006855
(43) Date de publication de la demande: 03.05.2023
(73) Titulaire: Supergrid Institute, 69100 Villeurbanne (FR)
(72) Inventeur: GUILLAUME, Renaud, 69007 LYON (FR); MESNAGE, Hugo, 69007 Lyon (FR)
(74) Mandataire: Opilex
(86) Numéro de dépôt international: PCT/EP2021/067969
(87) Numéro de publication internationale: WO 2022/003010

(56) Documents cités:
- EP-A1- 2 725 444
- EP-A1- 3 579 369
- EP-B1- 2 725 444
- WO-A1-2019/158600
- DE-B3-102011 119 384

## Description

L'invention concerne un système de production d'énergie utilisant un système de turbine hydraulique produisant de l'énergie électrique pour un réseau à courant alternatif. En particulier, l'invention concerne l'extension de la plage de fonctionnement du système de production d'énergie, tout en atténuant les phénomènes involontaires pendant le fonctionnement du système de turbine hydraulique.

De nombreux barrages hydroélectriques comprennent un système de turbine hydraulique pour produire de l'énergie électrique transférée à un réseau de courant alternatif par une liaison de connexion. Un tel système peut comprendre un système de stockage d'énergie relié à la liaison de raccordement pour augmenter la réactivité du système de turbine pour une nouvelle consigne de puissance électrique transmise par un opérateur de réseau électrique. Un tel système de stockage d'énergie est particulièrement utile lorsque le nouveau point de consigne implique de fortes variations de puissance. Un circuit de commande reçoit une valeur de consigne de puissance électrique envoyée par le gestionnaire de réseau électrique et, en fonction de cette valeur de consigne, commande un transfert de puissance transitoire entre la liaison de connexion et le système de stockage d'énergie en pilotant de manière sélective la charge ou la décharge du système de stockage d'énergie. Le système de turbine est configuré pour fonctionner sur une plage de puissance de sortie spécifique. En dehors de cette plage de puissance de sortie, on peut s'attendre à plusieurs phénomènes indésirables. Par exemple, avec une turbine Francis, une instabilité du système appelée « forme en S » apparaît pour une puissance de sortie comprise entre 0% et 20% de la puissance de sortie nominale, un tourbillon instable apparaît entre les aubes de la turbine pour une puissance de sortie comprise entre 20% et 40% de la puissance de sortie nominale, un câble hélicoïdal peut apparaître en aval de la turbine pour une puissance de sortie comprise entre 40% et 60% de la puissance de sortie nominale et un câble axial en aval de la turbine peut apparaître pour une puissance de sortie comprise entre 90% et 110% de la puissance de sortie nominale. Ces phénomènes indésirables sont connus pour endommager certaines parties du système de turbine et l'utilisation prolongée du système dans ces conditions oblige les opérateurs à réparer les pièces endommagées, ce qui entraîne une augmentation des arrêts du système pour maintenance et, par conséquent, des coûts de maintenance.

Il est donc nécessaire d'étendre la plage de puissance de sortie tout en évitant les divers phénomènes indésirables cités précédemment.

Le document EP3579369 décrit un procédé d'utilisation d'une puissance hydroélectrique comme réserve de puissance pour un réseau d'électricité. Plusieurs génératrices de puissance hydroélectrique sont utilisées, chacune à un niveau de puissance de sortie respectif, pour fournir de l'énergie électrique pour une puissance électrique totale audit réseau d'électricité. Une fréquence alternative de ce réseau électrique est suivie pour détecter des déviations par rapport à une plage de fréquence de base. Lorsqu'une déviation est détectée par rapport à cette plage de fréquence, on transfère de l'énergie électrique entre un dispositif de stockage d'énergie électrique et ledit réseau d'électricité.

Le document DE102011119384 décrit une centrale hydraulique munie d'une turbine accouplée mécaniquement à une génératrice. Au moins un dispositif de stockage d'énergie inertiel est couplé à une génératrice. Le dispositif de stockage d'énergie inertiel comprend une machine électrique, la génératrice et la machine électrique étant couplées.

L'invention vise à résoudre un ou plusieurs de ces inconvénients. L'invention porte donc sur un système de production d'énergie, tel que défini dans la revendication 1 annexée.

L'invention concerne également les variantes des revendications dépendantes. L'homme du métier comprendra que chacune des caractéristiques de la description ou des revendications dépendantes peut être combinée indépendamment avec les caractéristiques d'une revendication indépendante, mais sans constituer une généralisation intermédiaire.

D'autres caractéristiques et avantages de l'invention seront plus clairs à partir de la description qui en est donnée ci-dessous, à titre indicatif et de manière non limitative, en se référant aux dessins annexés, dans lesquels :
La [Fig.1] est une représentation schématique d'un système de production d'énergie selon un premier mode de réalisation de l'invention ;
La [Fig.2] est une représentation schématique d'un système de production d'énergie selon un deuxième mode de réalisation de l'invention ;
La [Fig.3] est une représentation schématique d'un système de production d'énergie selon un troisième mode de réalisation de l'invention ;
La [Fig.4] est une représentation schématique d'un système de production d'énergie selon un quatrième mode de réalisation de l'invention ;
La [Fig.5] est un diagramme de la plage des points de consigne de la puissance électrique d'un système de turbine hydraulique en fonction de la hauteur d'eau ;
La [Fig.6] est un diagramme de la plage de consigne de la puissance électrique de sortie illustrant un exemple de décalage de la consigne pour éviter de faire fonctionner la turbine hydraulique dans une plage de consigne de puissance électrique risquée et indésirable ;
La [Fig.7] est un diagramme de la plage de consigne de la puissance électrique de sortie illustrant un autre exemple de décalage de la consigne pour éviter de faire fonctionner la turbine hydraulique dans la plage de consigne de puissance électrique risquée et indésirable ;
La [Fig.8] est un diagramme illustrant l'évolution dans le temps de différents points de consigne de puissance de sortie en fonction de l'évolution d'un état de charge ;
La [Fig.9] est un diagramme d'une gamme de points de consigne de puissance électrique modifiée en fonction de la hauteur d'eau, avec des gammes de points de consigne de puissance électrique supérieure et inférieure étendues ;
La [Fig.10] est un diagramme de la gamme de points de consigne de sortie de puissance électrique modifiée en fonction de la hauteur d'eau, illustrant un exemple de décalage de point de consigne de transfert de puissance empêchant le système de turbine hydraulique de fonctionner dans la gamme de points de consigne de sortie de puissance électrique indésirable à faible risque ;
La [Fig.11] est un diagramme de la gamme de points de consigne de puissance électrique (Reps) en fonction de la hauteur d'eau, avec une gamme de points de consigne de puissance électrique supérieure et inférieure étendue pour un point de consigne de puissance électrique compris dans la gamme de puissance électrique supérieure ;
La [Fig.12] est un diagramme de la plage des points de consigne de la puissance électrique d'un système de turbine hydraulique de la figure 2 en fonction de la hauteur d'eau ;
La [Fig.13] est un diagramme de la plage de consigne de la puissance électrique de sortie illustrant un exemple de décalage de la consigne pour éviter de faire fonctionner le système de turbine hydraulique de la Figure 2 dans une plage de consigne de puissance électrique inatteignable et indésirable ;
La [Fig.14] est un diagramme de la plage de consigne de la puissance électrique de sortie illustrant un exemple de décalage de la consigne pour éviter de faire fonctionner le système de turbine hydraulique de la Figure 2 dans une plage de consigne de puissance électrique inatteignable et indésirable ;
La [Fig.15] est un diagramme illustrant l'évolution dans le temps de différentes valeurs de consigne de puissance en fonction de l'évolution d'un état de charge dans le système de turbine hydraulique de la figure 2.

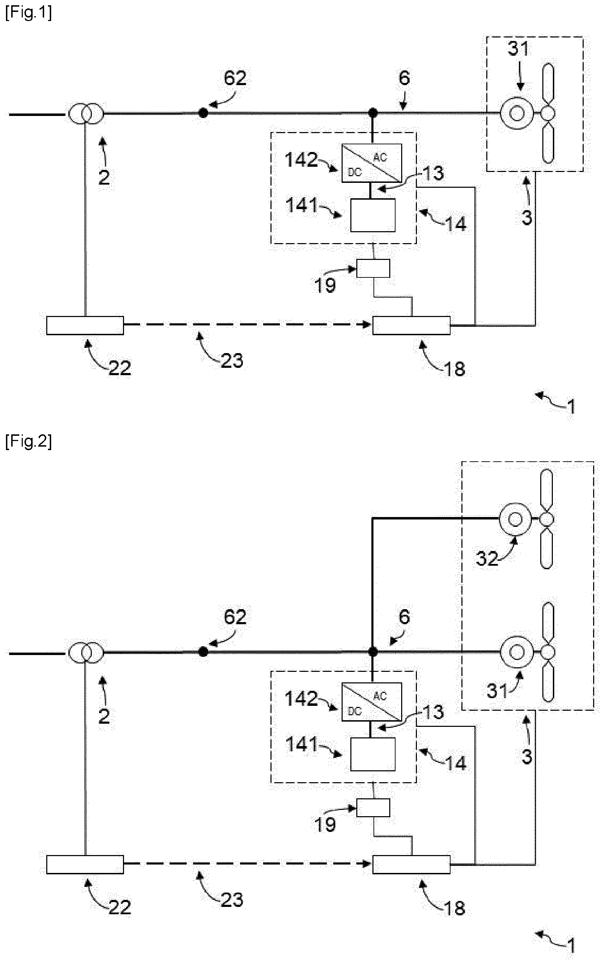

La Figure 1 est une représentation schématique d'un système de production d'énergie 1 selon un premier mode de réalisation de l'invention. Le système de production d'énergie 1 comprend un système de turbine hydraulique 3 comprenant une machine électrique 31 (généralement une machine synchrone), un système de stockage d'énergie 14, un dispositif de détermination de l'état de charge 19, un circuit de commande 18, une interface de connexion 62 et une liaison de connexion 6. La liaison de connexion 6 relie la machine électrique 31 à l'interface de connexion 62. Le système de stockage d'énergie 14 est relié à la liaison de connexion 6. Le circuit de commande 18 est connecté au dispositif de détermination de l'état de charge 19, au système de stockage d'énergie 14 et au système de turbine hydraulique 3. Le dispositif de détermination de l'état de charge 19 est configuré pour déterminer l'état de charge du système de stockage d'énergie 14.

L'interface de connexion 6 est connectée à un réseau courant alternatif 2, généralement un réseau courant alternatif triphasé. De plus, un circuit de commande 22 est connecté au réseau courant alternatif 2 et est utilisé pour générer un point de consigne de puissance électrique Reps basé sur la puissance demandée par le réseau courant alternatif 2. La machine électrique 31 est configurée pour générer de l'énergie électrique et la transférer au réseau courant alternatif 2 via l'interface de connexion 62.

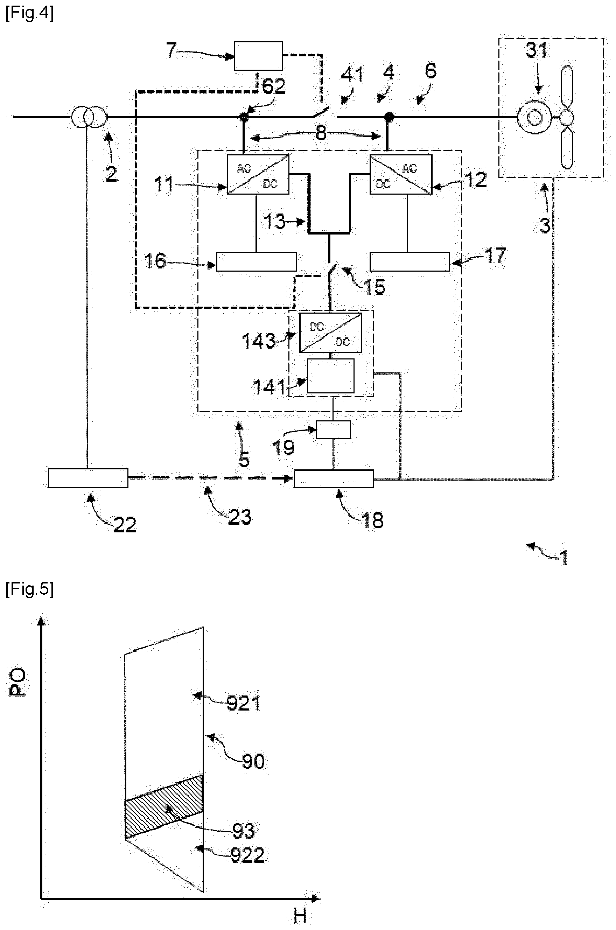

La figure 5 est un diagramme de la plage des points de consigne de la puissance électrique du système de turbine hydraulique 3 en fonction de sa hauteur d'eau H. La puissance électrique PO du système de turbine hydraulique 3 est illustrée en ordonnée, sa hauteur d'eau H est illustrée en abscisse. La plage des points de consigne de la puissance électrique comprend des points de consigne de la puissance électrique de sortie indésirable à risque identifié, illustrés dans la zone 93. Les points de consigne de production d'énergie électrique indésirable à risque identifiés peuvent correspondre à une instabilité en forme de S d'une turbine Francis ou d'une turbine Francis réversible, à l'apparition de tourbillons instables entre les aubes de turbine, à des câbles hélicoïdaux en aval d'une turbine ou à des câbles axiaux en aval d'une turbine. La zone vide 90 illustre la gamme des points de consigne de puissance électrique sûre. La zone 90 comprend une zone de puissance de sortie de sécurité inférieure 922 et une zone de puissance de sortie de sécurité supérieure 921. La zone située en dehors de la zone 90 peut être considérée comme une zone inaccessible.

Le circuit de commande 18 est configuré pour recevoir une consigne de puissance électrique Reps du circuit de commande 22 (par exemple via une liaison de communication 23). Le circuit de commande 18 est ici configuré pour recevoir la valeur de hauteur d'eau actuelle H du système de turbine hydraulique 3. Le circuit de commande 18 détermine ensuite si la valeur de consigne de la puissance électrique Reps fournie par le circuit de commande 22 appartient aux valeurs de consigne de la puissance de sortie indésirable à risque identifiées, illustrées par la zone 93 dans le schéma de la figure 5. Le circuit de commande 18 peut également recevoir tout paramètre pertinent pour déterminer si le point de consigne de puissance Reps appartient à la zone 93.

En fonction de la valeur de consigne de la puissance électrique Reps et de l'état de charge du système de stockage d'énergie 14, le circuit de commande 18 génère :
- un point de consigne de la puissance électrique réelle Aepos. Ce point de consigne Aepos est choisi pour faire partie des points de consigne de sortie de puissance électrique sûre identifiés, correspondant à la zone 90 du diagramme de la figure 5. Ce point de consigne Aepos est ensuite fourni au système de turbine 3 ;
- un point de consigne de transfert d'énergie électrique Epts. Ce point de consigne Epts est ensuite fourni au système de stockage d'énergie 14. Ce point de consigne Epts est fixé en fonction de l'état de charge déterminé du système de stockage d'énergie 14. Le point de consigne Epts entraîne une charge ou une décharge du système de stockage d'énergie 14 afin de transférer l'énergie électrique avec la liaison de connexion 6.

Les points de consigne Epts et Aepos sont déterminés par le circuit de commande 18 pour satisfaire la relation Reps = Epts+Aepo.

Lorsqu'ils sont dotés des points de consigne respectifs Epts et Aepos, le système de stockage d'énergie 14 et le système de turbine hydraulique 3 fournissent la puissance électrique correspondante sur la liaison de raccordement 6. Ainsi, le système de production d'énergie 1 est capable de fournir la puissance nécessaire Reps au réseau courant alternatif 2, sans faire fonctionner le système de turbine hydraulique 3 dans des conditions risquées non souhaitées. Les différentes gestions de l'état de charge du système de stockage de l'énergie 14 sont mises en évidence ci-dessous.

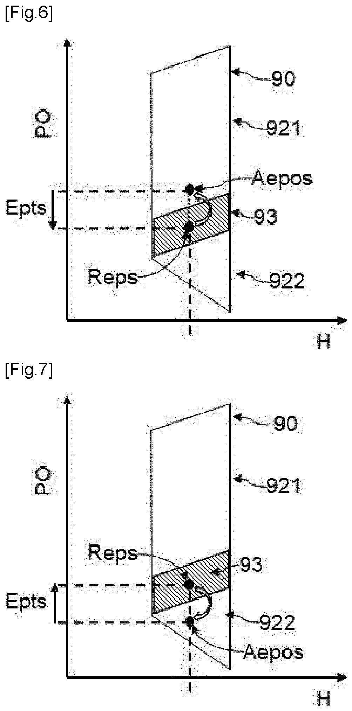

La figure 6 illustre un premier mode de fonctionnement du système de production d'énergie 1. Un point de consigne Reps est reçu par le circuit de commande 18 et est situé dans la zone à risque 93 indésirable. Dans ce premier mode de fonctionnement du système de production d'énergie 1, le système de stockage d'énergie 14 est déterminé à être plutôt déchargé, en fonction de son état de charge. L'état de charge est par exemple comparé à un niveau seuil (par exemple 50%) pour déterminer si le système de stockage d'énergie 14 est plutôt déchargé ou plutôt chargé. Le circuit de commande 18 détermine ici que le système de stockage d'énergie 14 est déchargé. Le point de consigne Aepos est alors fixé plus haut que le point de consigne Reps, dans la zone 921. Ce point de consigne Aepos est envoyé au système de turbine hydraulique 3. Le point de consigne Epts est réglé pour charger le système de stockage d'énergie 14, le système de turbine hydraulique 3 transférant la puissance de charge au système de stockage d'énergie 14. Ce point de consigne Epts est fourni au système de stockage d'énergie 14.

La figure 7 illustre un premier mode de fonctionnement du système de production d'énergie 1. Un point de consigne Reps est reçu par le circuit de commande 18 et est situé dans la zone à risque 93. Dans ce premier mode de fonctionnement du système de production d'énergie 1, le système de stockage d'énergie 14 est déterminé à être plutôt déchargé, en fonction de son état de charge. Le point de consigne Aepos est alors fixé plus bas que le point de consigne Reps, dans la zone 922. Ce point de consigne Aepos est envoyé au système de turbine hydraulique 3. Le point de consigne Epts est réglé pour décharger le système de stockage d'énergie 14, le système de stockage d'énergie 14 transférant la puissance au réseau courant alternatif 2. Ce point de consigne Epts est fourni au système de stockage d'énergie 14.

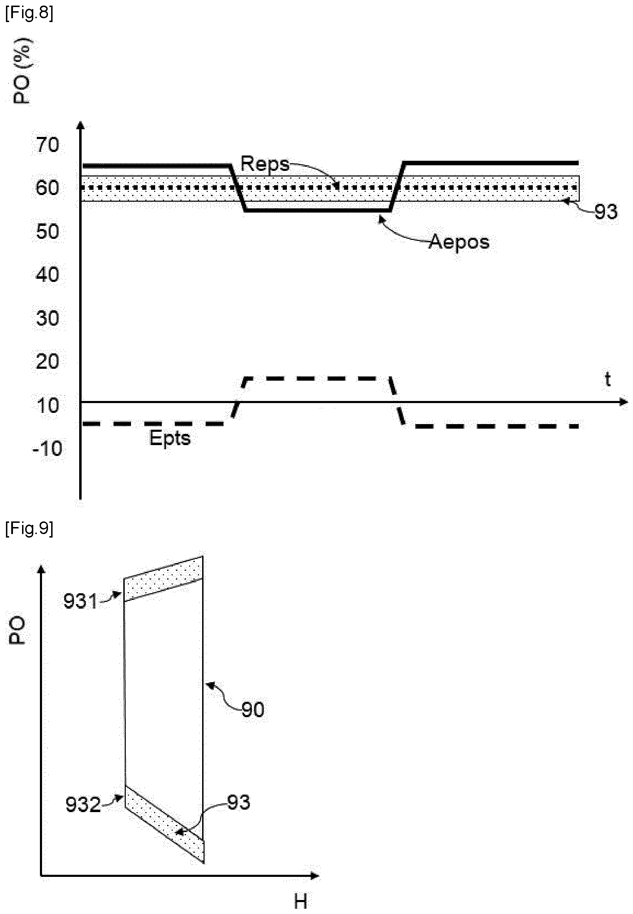

Le circuit de commande 18 peut alterner entre le premier et le deuxième mode de fonctionnement, comme l'illustre la figure 8. Le diagramme de la figure 8 illustre l'évolution temporelle des points de consigne. Dans cet exemple, le point de consigne Reps (ligne pointillée) reçu par le circuit de commande 18 reste à un niveau identique dans la zone à risque 93 indésirable. Le point de consigne Aepos est illustré par une ligne continue. Le point de consigne Epts est illustré par une ligne pointillée. Dans un premier temps, le système de stockage d'énergie 14 est déchargé. Par conséquent, le point de consigne Epts est négatif et le point de consigne Aepos est supérieur au point de consigne Reps, ce qui entraîne une charge du système de stockage d'énergie 14.

Une fois qu'un niveau de charge donné du système de stockage d'énergie 14 est atteint, le système de stockage d'énergie 14 doit être déchargé. Par conséquent, les points de consigne Epts et Aepos sont progressivement décalés. Par conséquent, le point de consigne Epts est fixé positif et le point de consigne Aepos devient inférieur au point de consigne Reps.

Une fois qu'un niveau de décharge donné du système de stockage d'énergie 14 est atteint, le système de stockage d'énergie 14 doit être chargé. Par conséquent, les points de consigne Epts et Aepos sont progressivement décalés. Par conséquent, le point de consigne Epts est fixé négatif et le point de consigne Aepos devient supérieur au point de consigne Reps.

La figure 9 est un diagramme d'une gamme de points de consigne de puissance électrique modifiée pour un système de production d'énergie 1, en fonction de la hauteur d'eau de son système de turbine hydraulique 3. La gamme de points de consigne de la puissance électrique est fournie avec des plages de points de consigne de la puissance électrique supérieure et inférieure étendues. La plage de consigne de puissance est étendue à la zone supérieure 931 et à la zone inférieure 932, qui sont des zones inaccessibles ou interdites pour le système de turbine 3.

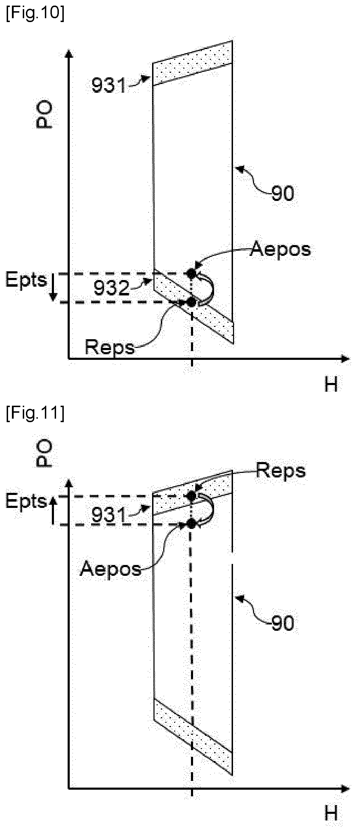

La figure 10 illustre un premier mode de fonctionnement du système de production d'énergie 1. Un point de consigne Reps est reçu par le circuit de commande 18 et est situé dans la zone à risque inférieure 932 indésirable. Dans ce premier mode de fonctionnement du système de production d'énergie 1, le système de stockage d'énergie 14 est déterminé à être plutôt déchargé, en fonction de son état de charge. Le point de consigne Aepos est alors fixé plus haut que le point de consigne Reps, dans la zone 90. Ce point de consigne Aepos est envoyé au système de turbine hydraulique 3. Le point de consigne Epts est réglé pour charger le système de stockage d'énergie 14, le système de turbine hydraulique 3 transférant la puissance de charge au système de stockage d'énergie 14. Ce point de consigne Epts est fourni au système de stockage d'énergie 14. Ainsi, le système de production d'énergie 1 peut rapidement fournir une puissance inférieure à celle que le système de turbine hydraulique 3 seul pourrait fournir.

Pour permettre une telle charge du système de stockage de l'énergie 14, le circuit de commande 18 peut effectuer une décharge préalable du système de stockage de l'énergie 14 de manière préventive. Par exemple, si le circuit de commande 18 identifie un point de consigne Epts se rapprochant de la zone indésirable à faible risque 932, il peut déclencher une décharge du système de stockage d'énergie 14, permettant ainsi à ce système de stockage d'énergie 14 de subir une charge ultérieure. Afin d'effectuer la décharge, les Epts peuvent être mis en positif et les Aepos peuvent être diminués de sorte que la puissance de sortie du système de production d'énergie 1 soit égale aux Reps.

La figure 11 est un schéma illustrant un quatrième mode de fonctionnement du système de production d'énergie 1. Un point de consigne Reps est reçu par le circuit de commande 18 et est situé dans la zone à risque supérieure 931 indésirable. Dans ce quatrième mode de fonctionnement du système de production d'énergie 1, le système de stockage d'énergie 14 est déterminé à être plutôt déchargé, en fonction de son état de charge. Le point de consigne Aepos est alors fixé plus bas que le point de consigne Reps, dans la zone 90. Ce point de consigne Aepos est envoyé au système de turbine 3. Le point de consigne Epts est réglé pour décharger le système de stockage d'énergie 14, le système de stockage d'énergie 14 transférant la puissance au réseau courant alternatif 2. Ce point de consigne Epts est fourni au système de stockage d'énergie 14. Ainsi, le système de production d'énergie 1 peut rapidement fournir une puissance inférieure à celle que le système de turbine hydraulique 3 seul pourrait fournir.

Pour permettre une telle décharge du système de stockage de l'énergie 14, le circuit de commande 18 peut effectuer une charge préalable du système de stockage de l'énergie 14 de manière préventive. Par exemple, si le circuit de commande 18 identifie un point de consigne Epts se rapprochant de la zone indésirable à risque supérieure 931, il peut déclencher une charge du système de stockage d'énergie 14, permettant ainsi à ce système de stockage d'énergie 14 de subir une décharge ultérieure. Afin d'effectuer la décharge, les Epts peuvent être mis en positif et les Aepos peuvent être diminués de sorte que la puissance de sortie du système de production d'énergie 1 soit égale aux Reps.

Le dispositif de détermination de l'état de charge 19 peut comprendre des capteurs pour mesurer la tension ou le courant du système de stockage d'énergie 14 ou des ordinateurs qui simulent l'état de charge instantané du système de stockage d'énergie 14 en fonction de ses caractéristiques. Le dispositif de détermination de l'état de charge 19 est configuré pour déterminer l'état de charge actuel du système de stockage d'énergie 14 et pour le transmettre au circuit de commande 18. Le dispositif de détermination de l'état de charge 19 peut également évaluer l'état de santé du système de stockage d'énergie 14 et pour le transmettre au circuit de commande 18.

Dans la même mode de réalisation de l'invention, le système de stockage d'énergie 14 comprend un transducteur électrique courant continu 141 et un convertisseur courant alternatif/courant continu 142. L'interface courant alternatif du convertisseur courant alternatif/courant continu 142 est connectée à la liaison de connexion 6 et l'interface courant continu du convertisseur courant alternatif/courant continu 142 est connectée au transducteur électrique courant continu 141 qui permet le transfert de puissance entre la liaison de connexion 62 et le transducteur courant continu 141.

La Figure 2 est une représentation schématique d'un système de production d'énergie 1 selon un deuxième mode de réalisation de l'invention. Ce deuxième mode de réalisation est identique au premier, à l'exception de la structure du système de turbine hydraulique 3. Dans ce mode de réalisation, le système de turbine hydraulique 3 comprend une première pompe-turbine réversible 31 et une deuxième pompe-turbine réversible 32. Chaque pompe-turbine réversible comprend une machine électrique qui est reliée à la liaison de raccordement 6. Selon un mode de fonctionnement de ce mode de réalisation, chaque pompe-turbine réversible échange de l'énergie électrique avec le réseau courant alternatif 2. Par conséquent, la valeur de consigne de la puissance électrique réelle Aepos transmise par le circuit de commande 18 remplit la relation suivante : Aepos = Aepos1 + Aepos2, Aepos1 et Aepos2 étant les valeurs de consigne de la puissance électrique réelle transmise respectivement à la première turbine 31 et à la deuxième turbine 32. Aepos1 et Aepos2 appartiennent aux zones de sécurité des pompes-turbines respectives 31 et 32.

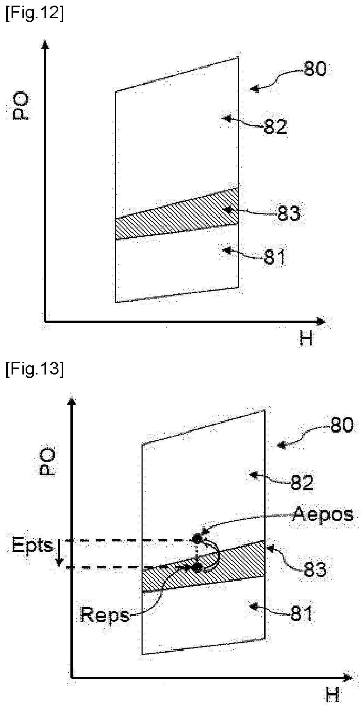

La figure 12 est un diagramme de la plage des points de consigne de la puissance électrique du système de turbine hydraulique 3 de la figure 2, basé sur la hauteur d'eau H des pompes-turbines 31 et 32. La puissance électrique PO du système de turbine 3 est illustrée en ordonnée, sa hauteur d'eau H est illustrée en abscisse. La zone 80 illustre la gamme des valeurs de consigne possibles de la puissance électrique pour le système de turbine 3. La zone 80 comprend deux zones 81 et 82. La zone 81 correspond à la plage des valeurs de consigne de puissance électrique possibles fournies par la pompe-turbine 31 ou la pompe-turbine 32 individuellement (les pompes-turbines 31 et 32 sont ici identiques). La zone 82 correspond à la plage des points de consigne possibles de la puissance électrique pouvant être atteinte avec les deux pompes-turbines 31 et 32 fonctionnant simultanément. La plage des points de consigne de la puissance électrique comprend des points de consigne de la puissance électrique de sortie inaccessibles (et donc indésirables pour le système de turbine 3), illustrés dans la zone 83.

Dans cette configuration, les pompes-turbines 31 et 32 peuvent fonctionner en mode turbine ou en mode pompe. L'une d'elles peut être arrêtée. Les pompes-turbines 31 et 32 peuvent fonctionner selon une combinaison de ces possibilités. Dans un autre mode de fonctionnement du deuxième mode de réalisation de l'invention, la première pompe-turbine réversible 31 fonctionne en mode pompe pour faire passer l'eau au-dessus du barrage. La pompe-turbine 31 fonctionne en court-circuit hydraulique avec la deuxième pompe-turbine réversible 32. La deuxième pompe-turbine 32 fonctionne en mode générateur. Cette configuration, combinée aux transferts de puissance entre le système de stockage d'énergie 14 et la liaison de connexion 6, permet au système de turbine 3 d'étendre la plage de consigne de la puissance électrique du système de turbine 3 et de produire de la puissance électrique pour des points de consigne de puissance électrique plus ou moins élevés.

La figure 13 illustre un mode de fonctionnement du système de production d'énergie 1 de la Figure 2. Un point de consigne Reps est reçu par le circuit de commande 18 et est situé dans la zone 83 inatteignable et donc indésirable. Dans ce premier mode de fonctionnement du système de production d'énergie 1, le système de stockage d'énergie 14 est déterminé à être plutôt déchargé, en fonction de son état de charge. L'état de charge est par exemple comparé à un seuil (par exemple 50%) pour déterminer si le système de stockage d'énergie 14 est plutôt déchargé ou plutôt chargé. Les points de consigne Aepos1 et Aepos2 sont ensuite réglés à leurs valeurs minimales. La somme Aepos = Aepos1 + Aepos2 est supérieure au point de consigne Reps, dans la zone 82. Ces points de consigne Aepos1 et Aepos2 sont envoyés respectivement aux turbines 31 et 32. Le point de consigne Epts est réglé pour charger le système de stockage d'énergie 14, le système de turbine 3 transférant la puissance de charge au système de stockage d'énergie 14. Ce point de consigne Epts est fourni au système de stockage d'énergie 14. Plus précisément, les deux pompes-turbines 31 et 32 fonctionnent simultanément en mode turbine. Le point de consigne Aepos du système de turbine 3 est ici la somme des points de consigne respectifs Aepos1 et Aepos2 des pompes-turbines 31 et 32 respectivement.

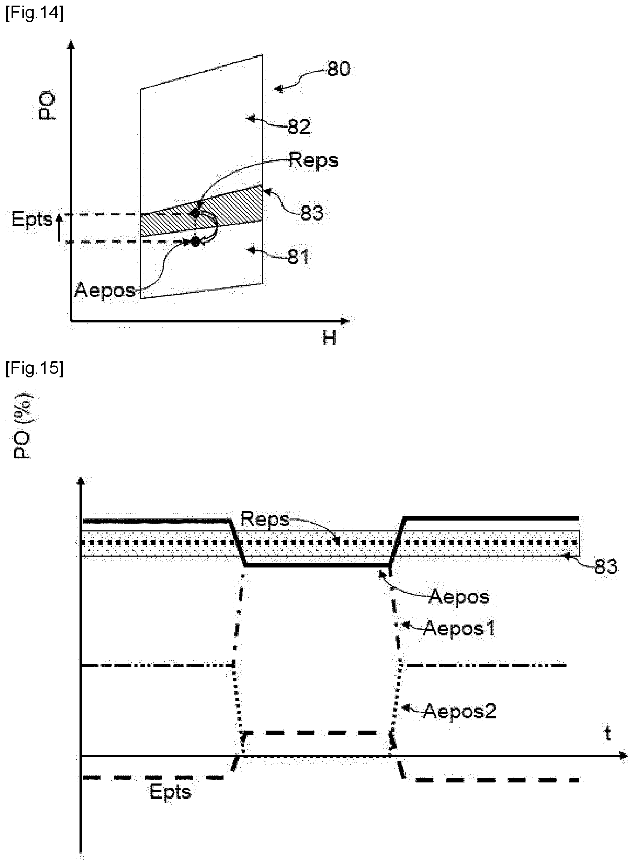

La figure 14 illustre un autre mode de fonctionnement du système de production d'énergie 1 de la Figure 2. Un point de consigne Reps est reçu par le circuit de commande 18 et est situé dans la zone 83 inatteignable et indésirable. Dans ce deuxième mode de fonctionnement du système de production d'énergie 1, le système de stockage d'énergie 14 est déterminé comme étant plutôt chargé, en fonction de son état de charge. L'état de charge est par exemple comparé à un seuil (par exemple 50%) pour déterminer si le système de stockage d'énergie 14 est plutôt déchargé ou plutôt chargé. Le circuit de commande 18 détermine ici que le système de stockage d'énergie 14 est chargé. Le point de consigne Aepos1 est réglé à la valeur maximale tandis que Aepos2 est réglé à zéro, ce qui signifie que la turbine 32 est arrêtée. Aepos = Aepos1 + Aepos2 est alors inférieur au point de consigne Reps, dans la zone 81. Ce point de consigne Aepos est envoyé au système de turbine hydraulique 3. Le système de turbine 3 ne fait fonctionner que la pompe-turbine 31 dans la zone 81 et arrête le fonctionnement de la pompe-turbine 32. Ainsi, Aepos est défini par le point de consigne Aepos1 de la pompe-turbine 31 uniquement. Le point de consigne Aepos2 est nul. Le point de consigne Epts est réglé pour décharger le système de stockage d'énergie 14, le système de stockage d'énergie 14 transférant la puissance au réseau courant alternatif 2. Ce point de consigne Epts est fourni au système de stockage d'énergie 14.

Pour un point de consigne Reps restant dans la zone 83, le circuit de commande 18 peut alterner entre les deux modes de fonctionnement (illustrés aux figures 13 et 14), comme le montre la figure 15. Le diagramme de la figure 15 illustre l'évolution temporelle des points de consigne. Dans cet exemple, le point de consigne Reps (ligne pointillée) reçu par le circuit de commande 18 reste à un niveau identique dans la zone 83 inatteignable et indésirable. Le point de consigne Aepos est illustré par une ligne continue. Le point de consigne Epts est illustré par une ligne pointillée. Les points de consigne Aepos1 et Aepos2 sont également illustrés et satisfont à la relation Aepos = Aepos1 + Aepos2.

Dans un premier temps, le système de stockage d'énergie 14 est déchargé. Par conséquent, le point de consigne Epts est négatif et le point de consigne Aepos est supérieur au point de consigne Reps, ce qui entraîne une charge du système de stockage d'énergie 14. Les deux pompes-turbines 31 et 32 sont en service simultanément en mode turbine.

Une fois qu'un niveau de charge donné du système de stockage d'énergie 14 est atteint, le système de stockage d'énergie 14 doit être déchargé. Par conséquent, les points de consigne Epts et Aepos sont progressivement décalés. Par conséquent, le point de consigne Epts est fixé positif et le point de consigne Aepos devient inférieur au point de consigne Reps. Progressivement, seule la pompe-turbine 31 reste en service en mode turbine. Par conséquent, la relation Aepos = Aepos1 est satisfaite.

Une fois qu'un niveau de décharge donné du système de stockage d'énergie 14 est atteint, le système de stockage d'énergie 14 doit être chargé. Par conséquent, les points de consigne Epts et Aepos sont progressivement décalés et les deux pompes-turbines 31 et 32 sont simultanément en service en mode turbine. Par conséquent, le point de consigne Epts est fixé négatif et le point de consigne Aepos devient supérieur au point de consigne Reps. La relation Aepos = Aepos1 + Aepos2 est alors satisfaite. La relation Reps = Aepos1 + Aepos2 + Epts est vérifiée pour les deux modes de fonctionnement.

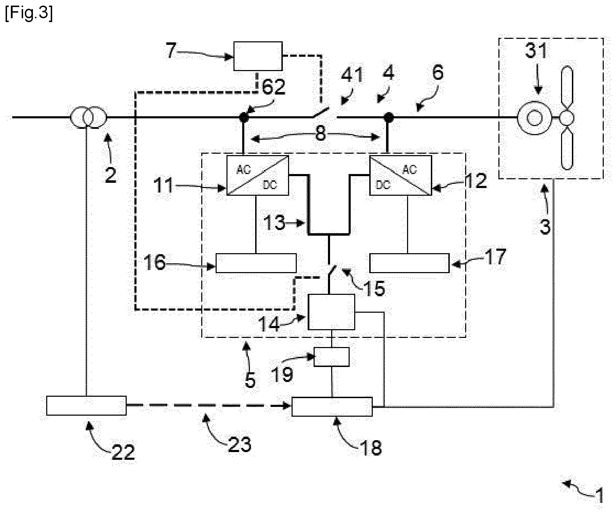

La Figure 3 est une représentation schématique d'un système de production d'énergie 1 selon un troisième mode de réalisation de l'invention. Dans ce mode de réalisation, le système de production d'énergie 1 comprend une branche 4 et une branche 8. Les branches 4 et 8 sont connectées en parallèle entre l'interface de connexion 62 et la liaison de connexion 6. La branche 4 est définie comme la branche d'alimentation principale et comprend un interrupteur commandé 41. La branche 8 est définie comme une branche d'alimentation secondaire et comprend un convertisseur de fréquence variable 5.

Le convertisseur de fréquence variable 5 comprend un convertisseur courant alternatif/courant continu 11, un autre convertisseur courant alternatif/courant continu 12, une liaison courant continu 13, un interrupteur commandé 15 et le système de stockage d'énergie 14.

Une interface courant alternatif du convertisseur courant alternatif/courant continu 11 est connectée à l'interface de connexion 62 et une interface courant alternatif du convertisseur courant alternatif/courant continu 12 est connectée à la liaison de connexion 6. La liaison courant continu 13 relie électriquement les interfaces courant continu respectives des convertisseurs courant alternatif/courant continu 11 et 12, pour permettre un transfert de puissance entre ces interfaces courant continu.

Les convertisseurs courant alternatif/courant continu 11 et 12 sont configurés pour être réversibles en courant. Les convertisseurs courant alternatif/courant continu 11 et 12 sont respectivement commandés par les circuits de commande 16 et 17. Pour un mode du circuit de commande 16, la puissance est transférée de l'interface courant alternatif du convertisseur courant alternatif/courant continu 11 à l'interface courant continu du convertisseur courant alternatif/courant continu 11 et dans un autre mode du circuit de commande 16, la puissance est transférée de l'interface courant continu du convertisseur courant alternatif/courant continu 11 à l'interface courant alternatif du convertisseur courant alternatif/courant continu 11. Pour un mode du circuit de commande 17, la puissance est transférée de l'interface courant continu du convertisseur courant alternatif/courant continu 12 à l'interface courant alternatif du convertisseur courant alternatif/courant continu 12 et dans un autre mode du circuit de commande 17, la puissance est transférée de l'interface courant alternatif du convertisseur courant alternatif/courant continu 12 à l'interface courant continu du convertisseur courant alternatif/courant continu 12.

Le système de production d'énergie 1 comprend en outre un circuit de commande 7. Le circuit de commande 7 est configuré pour commander le commutateur 41 et le commutateur 15 du convertisseur de fréquence variable 5. Le circuit de commande 7 contrôle donc le transfert de puissance entre le système de turbine 3 et le réseau courant alternatif 2 par la branche principale 4 et le transfert de puissance entre le système de stockage d'énergie 14 et la liaison de connexion 6.

Le circuit de commande 7 a un mode de commande, dans lequel il ferme simultanément le commutateur 41 et le commutateur 15 et connecte donc l'interface de connexion 62 et la liaison de connexion 6. Dans ce mode, le circuit de commande 7 permet le transfert de puissance du système de turbine 3 au réseau courant alternatif 2 par la branche principale 4 (ou vice versa du réseau courant alternatif 2 au système de turbine 3). En outre, le circuit de commande 18 contrôle le transfert de puissance entre le système de stockage d'énergie 14 et le réseau courant alternatif 2 ou le système de turbine 3 par la branche 8. En effet, les convertisseurs courant alternatif/courant continu 11 et 12 sont configurés :
- pour transférer la puissance respectivement de leur interface courant continu à leur interface courant alternatif lorsqu'une décharge du système de stockage d'énergie 14 est demandée ; ou
- pour transférer la puissance respectivement de leur interface courant alternatif à leur interface courant continu pour transférer la puissance du système de turbine 3 ou du réseau courant alternatif 2 au système de stockage d'énergie 14 lorsqu'une charge du système de stockage d'énergie 14 est demandée.

La Figure 4 est une représentation schématique d'un système de production d'énergie 1 selon un quatrième mode de réalisation de l'invention. Ce mode de réalisation est identique au troisième, à l'exception de la structure de son dispositif de stockage d'énergie 14. Dans ce mode de réalisation, le système de stockage d'énergie 14 comprend un transducteur électrique courant continu 141 et un convertisseur courant continu/courant continu 143. Le convertisseur courant continu/courant continu 143 relie électriquement le système de stockage d'énergie 14 à l'interface courant continu des convertisseurs courant alternatif/courant continu 11 et 12. Le convertisseur courant continu/courant continu 143 est configuré pour adapter le niveau de tension entre le dispositif de stockage 141 et les interfaces courant continu des convertisseurs courant alternatif/courant continu 11 et 12.

Dans les modes de réalisation de l'invention, le système de stockage d'énergie 14 peut comprendre un dispositif de stockage choisi dans le groupe constitué par un supercondensateur, une pile à combustible, une batterie électrochimique, un moteur électrique entraînant un volant d'inertie, un compresseur d'air et un stockage électromagnétique.

Dans le cas d'une batterie électrochimique, le circuit de commande 18 contrôle la charge et la décharge du transducteur électrique courant continu 141 et fixe la valeur de consigne de transfert de puissance électrique Epts afin de maintenir l'état de charge du transducteur électrique courant continu 141 ou dans une plage de charge adaptée pour minimiser son usure et améliorer sa durée de vie. Une telle plage de charge peut par exemple couvrir 20% de la capacité globale. Les limites de cette plage de charge sont fixées en fonction des caractéristiques de la batterie (par exemple, les composants chimiques utilisés). Par exemple, une telle plage peut être comprise entre 40 et 60% pour les batteries Li-lon.

## Revendications

1. Système de production d'électricité (1), comprenant :
- un système de turbine hydraulique (3) comprenant une machine électrique, ledit système de turbine hydraulique (3) ayant des points de consigne de sortie de puissance électrique indésirable et des points de consigne de sortie de puissance électrique sûre identifiés ;
- un système de stockage d'énergie (14) ;
- une liaison de connexion (6) connectée au système de stockage d'énergie (14) et à la machine électrique du système de turbine hydraulique (3), la liaison de connexion (6) comprenant une interface de connexion (62) pour la connexion à un réseau courant alternatif (2) ;
- un dispositif de détermination de l'état de charge (19) configuré pour déterminer l'état de charge du système de stockage d'énergie (14) ;
- le système (1) comprend en outre un circuit de commande (18) configuré pour contrôler un transfert de puissance électrique entre la liaison de connexion (6) et le système de stockage d'énergie (14) en commandant sélectivement une charge ou une décharge du système de stockage d'énergie (14), configuré pour recevoir un point de consigne de puissance électrique Reps ;
- **caractérisé en ce que** le circuit de commande est en outre :
- configuré pour déterminer que ce point de consigne de puissance électrique reçu Reps appartient aux points de consigne de sortie de puissance électrique indésirable,
- configuré pour générer une valeur de consigne de transfert de puissance électrique Epts pour le système de stockage d'énergie (14) et une valeur de consigne de sortie de puissance électrique réelle Aepos pour le système de turbine hydraulique (3) appartenant aux valeurs de consigne de sortie de puissance électrique de sécurité, satisfaisant à la relation Reps = Epts + Aepos, dans laquelle la valeur de consigne de transfert de puissance électrique Epts est fixée en fonction de l'état de charge déterminé du système de stockage d'énergie (14).

2. Système de production d'énergie (1) selon la revendication 1, dans lequel le système de stockage d'énergie (14) comprend un transducteur électrique à courant continu (141), un convertisseur courant alternatif/courant continu (142) ayant une interface courant alternatif connectée à la liaison de connexion (6) et une interface courant continu connectée au transducteur électrique à courant continu (141).

3. Système de production d'énergie (1) selon la revendication 2, dans lequel le système de stockage d'énergie (14) comprend un convertisseur courant continu/courant continu (143) configuré pour modifier le niveau de tension entre le transducteur électrique courant continu (141) et l'interface courant continu du convertisseur courant alternatif/courant continu (142).

4. Système de production d'énergie (1) selon la revendication 2 ou 3, dans lequel le transducteur électrique à courant continu (141) comprend un dispositif choisi dans le groupe constitué par un supercondensateur, une pile à combustible, une batterie électrochimique, un moteur électrique entraînant un volant d'inertie, un compresseur d'air et un stockage électromagnétique.

5. Système de production d'énergie (1) selon la revendication 4, dans lequel le transducteur électrique à courant continu (141) est une batterie électrochimique ayant une plage d'état de charge dans laquelle son espérance de vie est optimisée, dans laquelle le circuit de commande (18) est configuré pour régler le point de consigne de transfert de puissance électrique Epts de sorte que l'état de charge de la batterie électrochimique (141) reste dans ladite plage de charge.

6. Système de production d'énergie (1) selon l'une quelconque des revendications précédentes, dans lequel lesdits points de consigne de sortie de puissance électrique indésirable et lesdits points de consigne de sortie de puissance électrique sûre sont définis pour différentes valeurs de la hauteur d'eau dudit système de turbine hydraulique (3).

7. Système de production d'électricité (1) selon l'une quelconque des revendications précédentes, dans lequel les points de consigne de sortie de puissance électrique indésirable identifiés sont des points de consigne de puissance inaccessible du système de turbine hydraulique (3).

8. Système de production d'électricité (1) selon l'une quelconque des revendications précédentes, dans lequel le circuit de commande (18) entraîne une charge du dispositif de stockage d'énergie (14) lorsque le point de consigne Reps augmente au-dessus d'un niveau seuil prédéterminé et si l'état de charge du dispositif de stockage d'énergie (14) est inférieur à un seuil prédéterminé.

9. Système de production d'électricité (1) selon l'une quelconque des revendications précédentes, dans lequel le circuit de commande (18) entraîne une charge du dispositif de stockage d'énergie (14) lorsque le point de consigne Reps diminue en dessous d'un niveau seuil prédéterminé et si l'état de charge du dispositif de stockage d'énergie (14) est supérieur à un seuil prédéterminé.

10. Système de production d'électricité (1) selon l'une quelconque des revendications précédentes, dans lequel le système de turbine hydraulique (3) comprend plusieurs turbines hydrauliques, chaque turbine hydraulique comprenant une machine électrique respective reliée à la liaison de connexion (6).

11. Système de production d'électricité (1) selon l'une quelconque des revendications précédentes, dans lequel le système de turbine hydraulique (3) comprend un nombre N de pompes-turbines (31, 32) ayant chacune un indice i fonctionnant en court-circuit hydraulique et fonctionnant avec des points de consigne de sortie de puissance électrique réels respectifs Aeposi, le système de turbine hydraulique (3) étant configuré pour faire fonctionner sélectivement au moins une desdites pompes-turbines en mode turbine et pour faire fonctionner au moins une autre desdites pompes-turbines en mode pompe, avec Aepos = Σ Aeposi pour i compris entre 1 et N.

## Patentansprüche

1. Stromerzeugungssystem (1), umfassend:
- ein Wasserturbinensystem (3), das eine elektrische Maschine umfasst, wobei das Wasserturbinensystem (3) identifizierte Sollwerte für die Abgabe unerwünschter elektrischer Leistung und Sollwerte für die Abgabe gesicherter elektrischer Leistung aufweist;
- ein Energiespeichersystem (14);
- eine Anschlussverbindung (6), die mit dem Energiespeichersystem (14) und der elektrischen Maschine des Wasserturbinensystems (3) verbunden ist, wobei die Anschlussverbindung (6) eine Anschlussschnittstelle (62) für den Anschluss an ein Wechselstromnetz (2) umfasst;
- eine Ladezustandsbestimmungsvorrichtung (19), die ausgebildet ist, um den Ladezustand des Energiespeichersystems (14) zu bestimmen;
- das System (1) ferner eine Steuerschaltung (18) umfasst, die ausgebildet ist, um eine Übertragung elektrischer Leistung zwischen der Anschlussverbindung (6) und dem Energiespeichersystem (14) zu steuern, indem sie selektiv eine Ladung oder Entladung des Energiespeichersystems (14) steuert, das ausgebildet ist, um einen elektrischen Leistungssollwert Reps zu empfangen;
- **dadurch gekennzeichnet, dass** die Steuerschaltung ferner Folgendes ist:
- ausgebildet, um zu bestimmen, dass dieser empfangene elektrische Leistungssollwert Reps zu den Sollwerten für die Abgabe unerwünschter elektrischer Leistung gehört,
- ausgebildet, um einen Sollwert für die Übertragung elektrischer Leistung Epts für das Energiespeichersystem (14) und einen Sollwert für die tatsächliche Abgabe elektrischer Leistung Aepos für das Wasserturbinensystem (3) zu erzeugen, die zu den Sollwerten für die Abgabe elektrischer Sicherheitsleistung gehören, die die Beziehung Reps = Epts + Aepos erfüllen, wobei der Sollwert für die Übertragung elektrischer Leistung Epts in Abhängigkeit von dem bestimmten Ladezustand des Energiespeichersystems (14) festgelegt wird.

2. Energieerzeugungssystem (1) nach Anspruch 1, wobei das Energiespeichersystem (14) einen elektrischen Gleichstromwandler (141), einen Wechselstrom-/Gleichstromwandler (142) mit einer Wechselstromschnittstelle, die mit der Verbindungsleitung (6) verbunden ist, und einer Gleichstromschnittstelle, die mit dem elektrischen Gleichstromwandler (141) verbunden ist, umfasst.

3. Energieerzeugungssystem (1) nach Anspruch 2, wobei das Energiespeichersystem (14) einen Gleichstrom-/Gleichstromwandler (143) umfasst, der ausgebildet ist, um den Spannungspegel zwischen dem elektrischen Gleichstromwandler (141) und der Gleichstromschnittstelle des Wechselstrom-/Gleichstromwandlers (142) zu ändern.

4. Energieerzeugungssystem (1) nach Anspruch 2 oder 3, wobei der elektrische Gleichstromwandler (141) eine Vorrichtung umfasst, die aus der Gruppe ausgewählt ist, die aus einem Superkondensator, einer Brennstoffzelle, einer elektrochemischen Batterie, einem Elektromotor, der ein Schwungrad antreibt, einem Luftkompressor und einem elektromagnetischen Speicher besteht.

5. Energieerzeugungssystem (1) nach Anspruch 4, wobei der elektrische Gleichstromwandler (141) eine elektrochemische Batterie mit einem Ladezustandsbereich ist, in dem seine Lebenserwartung optimiert ist, wobei die Steuerschaltung (18) ausgebildet ist, um den Sollwert für die Übertragung elektrischer Leistung Epts so einzustellen, dass der Ladezustand der elektrochemischen Batterie (141) innerhalb des Ladezustands bleibt.

6. Energieerzeugungssystem (1) nach einem der vorhergehenden Ansprüche, wobei die Sollwerte für die Abgabe unerwünschter elektrischer Leistung und die Sollwerte für die Abgabe gesicherter elektrischer Leistung für verschiedene Werte der Wasserhöhe des Wasserturbinensystems (3) definiert sind.

7. Stromerzeugungssystem (1) nach einem der vorhergehenden Ansprüche, wobei die identifizierten Sollwerte für die Abgabe unerwünschter elektrischer Leistung Sollwerte für die unzugängliche Leistung des Wasserturbinensystems (3) sind.

8. Stromerzeugungssystem (1) nach einem der vorhergehenden Ansprüche, wobei die Steuerschaltung (18) eine Ladung der Energiespeichervorrichtung (14) bewirkt, wenn der Sollwert Reps über einen vorbestimmten Schwellenwert ansteigt und der Ladezustand der Energiespeichervorrichtung (14) unter einem vorbestimmten Schwellenwert liegt.

9. Stromerzeugungssystem (1) nach einem der vorhergehenden Ansprüche, wobei die Steuerschaltung (18) eine Ladung der Energiespeichervorrichtung (14) bewirkt, wenn der Sollwert Reps unter einen vorbestimmten Schwellenwert fällt und der Ladezustand der Energiespeichervorrichtung (14) größer als ein vorbestimmter Schwellenwert ist.

10. Stromerzeugungssystem (1) nach einem der vorhergehenden Ansprüche, wobei das Wasserturbinensystem (3) mehrere Wasserturbinen umfasst, wobei jede Wasserturbine eine jeweilige elektrische Maschine umfasst, die mit der Anschlussverbindung (6) verbunden ist.

11. Stromerzeugungssystem (1) nach einem der vorhergehenden Ansprüche, wobei das Wasserturbinensystem (3) eine Anzahl N von Pumpenturbinen (31, 32) umfasst, die jeweils einen Index i aufweisen, die in einem hydraulischen Kurzschluss arbeiten und mit jeweiligen tatsächlichen Sollwerten für die Abgabe elektrischer Leistung Aeposi arbeiten, wobei das Wasserturbinensystem (3) ausgebildet ist, um selektiv mindestens eine der Pumpturbinen im Turbinenmodus zu betreiben und mindestens eine andere der Pumpturbinen im Pumpenmodus zu betreiben, wobei Aepos = Σ Aeposi für i zwischen 1 und N gilt.

## Claims

1. Electricity generation system (1), comprising:
- a water turbine system (3) comprising an electrical machine, wherein said water turbine system (3) has identified undesirable electrical output power setpoints and safe electrical output power setpoints;
- an energy storage device (14);
- a feeder link (6) connected to the energy storage system (14) and the electrical machine of the water turbine system (3), wherein the feeder link (6) comprises a connection interface (62) for connection to an AC grid (2);
- a state of charge determination device (19) configured to determine the state of charge of the energy storage system (14);
- the system (1) furthermore comprises a control circuit (18) configured to control electrical power transfer between the feeder link (6) and the energy storage system (14) by selectively controlling charging or discharging of the energy storage system (14), configured to receive an electrical power setpoint Reps;
- **characterised in that** the control circuit is furthermore:
- configured to determine that this received electrical power setpoint Reps belongs to the undesirable electrical output power setpoints,
- configured to generate an electrical power transfer setpoint Epts for the energy storage system (14) and an actual electrical output power setpoint Aepos for the water turbine system (3) belonging to the safety electrical output power setpoints, fulfilling the relationship Reps = Epts + Aepos, wherein the electrical power transfer setpoint Epts is set in dependence on the determined state of charge of the energy storage system (14).

2. Power generation system (1) according to claim 1, wherein the energy storage system (14) comprises a DC electrical transducer (141), an AC/DC converter (142) having an AC interface connected to the feeder link (6) and a DC interface connected to the DC electrical transducer (141).

3. Power generation system (1) according to claim 2, wherein the energy storage system (14) comprises a DC/DC converter (143) configured to change the voltage level between the DC electrical transducer (141) and the DC interface of the AC/DC converter (142).

4. Power generation system (1) according to claim 2 or 3, wherein the DC electrical transducer (141) comprises a device selected from the group consisting of a supercapacitor, a fuel cell, an electrochemical battery, an electric motor driving a flywheel, an air compressor and an electromagnetic storage.

5. Power generation system (1) according to claim 4, wherein the DC electrical transducer (141) is an electrochemical battery having a state of charge range in which its life expectancy is optimised, wherein the control circuit (18) is configured to set the electrical power transfer setpoint Epts such that the state of charge of the electrochemical battery (141) remains within said state of charge range.

6. Power generation system (1) according to any one of the preceding claims, wherein said undesirable electric output power setpoints and said safe electric output power setpoints are defined for different values of the water head of said water turbine system (3).

7. Electricity generation system (1) according to any one of the preceding claims, wherein the identified unwanted electrical output power setpoints are inaccessible power setpoints of the water turbine system (3).

8. Electricity generation system (1) according to any one of the preceding claims, wherein the control circuit (18) causes charging of the energy storage device (14) when the setpoint Reps increases above a predetermined threshold level and if the state of charge of the energy storage device (14) is below a predetermined threshold.

9. Electricity generation system (1) according to any one of the preceding claims, wherein the control circuit (18) causes charging of the energy storage device (14) when the setpoint Reps decreases below a predetermined threshold level and if the state of charge of the energy storage device (14) is above a predetermined threshold.

10. Electricity generation system (1) according to any one of the preceding claims, wherein the water turbine system (3) comprises a plurality of water turbines, each water turbine comprising a respective electrical machine connected to the feeder link (6).

11. Electricity generation system (1) according to any one of the preceding claims, wherein the water turbine system (3) comprises a number N of pump-turbines (31, 32) each having an index i operating in hydraulic short circuit and operating with respective actual electrical output power setpoints Aeposi, wherein the water turbine system (3) is configured to selectively operate at least one of said pump-turbines in turbine mode and to operate at least one other of said pump-turbines in pump mode, with Aepos = > Aeposi for i between 1 and N.
